(19) Europäisches Patentamt
European Patent Office
Office européen des brevets

(11) Publication number: 0 257 812
A2

(12) # EUROPEAN PATENT APPLICATION

(21) Application number: 87306655.9

(22) Date of filing: 28.07.87

(51) Int. Cl.4: C09D 3/00 , C08F 291/00 , C08F 265/08 , C08F 265/04 , C08F 2/46

(30) Priority: 05.08.86 US 893414

(43) Date of publication of application: 02.03.88 Bulletin 88/09

(84) Designated Contracting States: DE FR GB

(71) Applicant: THE STANDARD OIL COMPANY
200 Public Square, 36-F-3454
Cleveland Ohio 44114-2375(US)

(72) Inventor: Bartoszek-Loza, Rosemary
6570 Arbordale Avenue
Solon Ohio 44139(US)
Inventor: Butler, Richard J.
23951 Lakeshore Blvd., No. 1207
Euclid Ohio 44123(US)

(74) Representative: Smith, Sydney et al
Elkington and Fife High Holborn House 52/54
High Holborn
London WC1V 6SH(GB)

(54) **Nitrile acrylate coating composition containing pendant functionality and a radiation curable process.**

㊲ A coating composition comprising a nitrile acrylate polymer with pendant functionality useful as protective coatings. The composition comprises a nitrile monomer, acrylate monomer and multifunctional monomer; a reactive diluent; and a photoinitiator. The composition is 100% solvent free.

This invention further includes a process for producing 100 percent solids coatings that are corrosion resistant, adhesion cohesive and hard.

EP 0 257 812 A2

Xerox Copy Centre

# NITRILE ACRYLATE COATING COMPOSITION CONTAINING PENDANT FUNCTIONALITY AND A RADIATION CURABLE PROCESS

The present invention is directed generally to radiation curable coating compositions containing nitrile acrylate polymers with pendant functionality for use as protective coatings on various substrates such as metals, plastics, woods and the like. In another aspect, the invention relates to a novel nitrile acrylate coating composition containing pendant functionality. In another aspect, the invention relates to a novel 100 percent solids, room temperature radiation curable, in particular photocurable coating composition. In another aspect, the invention relates to a novel coating composition, and novel radiation curable process to produce the coating which coatings have excellent hardness, adhesion, barrier properties and corrosion resistance.

The desirability of forming photocurable coating compositions which can be developed without the need of conventional organic solvents has long been recognized. Organic solvents are costly, hazardous and need to be removed from the final coating, which requires considerable thermal energy. In accordance with this invention, it has now been discovered that nitrile acrylate multifunctional radiation cured coatings can be produced in a solventless system.

Nitrile polymer coatings are known in the art for their barrier properties to oxygen and water. However, in coatings there is limited solubility of the nitrile polymers which restricts the number of solvents that can be employed as reactive diluents. Enhanced solubility is desirable for increasing the reactivity of the nitrile polymers with reactive diluents and for expanding the use of the coating. The incorporation of an acrylate polymer with the nitrile polymer increases the solubility of the resultant nitrile acrylate polymer.

Pendant functionality through the use of a multifunctional monomer was incorporated into the nitrile acrylate polymer to enhance the homogenecity, cohesion and adhesion of the coating composition. In accordance with this invention, it was discovered that the synthesis of a nitrile acrylate polymer with pendant functionality would add to the polymer composition at least two reactive sites from the multifunctional monomer which would provide a site for incorporation into the polymer backbone and an additional site for subsequent crosslinking and grafting to the polymer and/or reactive diluent upon a cure to minimize channeling effects in the coating while retaining the solubility and barrier properties of the nitrile acrylate polymer system.

It is an object of this invention to produce a novel composition containing a nitrile acrylate polymer with pendant functionality for use as a coating or adhesive material. It is another object of this invention to produce a coating composition in a 100 percent solids, solvent free system to avoid the use of solvents. It is another object of this invention to produce the novel coating by a novel radiation curable process at ambient temperature. It is another object of this invention to produce radiation cured, in particular photocured, coatings which are hard, adhesive, cohesive and corrosion resistant.

These and other objects, together with the advantages over known methods shall become apparent from the specification which follows and are accomplished by the invention as herein described and claimed.

## SUMMARY OF THE INVENTION

This invention relates to a composition comprising a polymer comprising a nitrile monomer, an acrylate monomer and a multifunctional monomer; a reactive diluent and a photoinitiator. The novel composition of the instant invention are radiation cured to a tack free coating or adhesive material. The invention further includes a process to produce the novel composition comprising:

1. preparing a polymer comprising a nitrile monomer, an acrylate monomer and a multifunctional monomer;
2. forming a mixture of said polymer, a reactive diluent and a photoinitiator;
3. applying said mixture of the composition to a substrate; and
4. curing the composition by radiation to form a tack free coating or adhesive material.

The coatings produced by the process of the instant invention have excellent hardness, adhesion and corrosion resistance. The coating compositions of the instant invention are excellent coating and adhesive materials.

The radiation curable nitrile acrylate coating compositions containing pendant functionality of the instant invention can be used for industrial protection of various substrates, in particular metals where properties such as adhesion, hardness and corrosion resistance are important. Major uses for the coatings would be in the automotive industry, oil industry, pulp and paper industry and others. Further, the novel composition may be employed as an adhesive material or an encapsulant.

## DETAILED DESCRIPTION OF THE INVENTION

The radiation curable coating composition of the instant invention are the reaction products of a polymer comprising a nitrile monomer, an acrylate monomer and a multifunctional monomer; a reactive diluent and a photoinitiator.

The first component of the coating composition of the instant invention is a polymer synthesized from a nitrile monomer, an acrylate monomer and a multifunctional monomer. The polymer is characterised as a nitrile acrylate polymer containing pendant functionality. The pendant functionality is defined as an incorporation of a multifunctional monomer that has at least two reactive sites, one reactive site for crosslinking into the polymer backbone upon polymer formation and another reactive site for subsequent crosslinking and grafting into the polymer backbone and/or reactive diluent upon cure of coating.

The coating composition generally contains from about 5 weight percent to about 60 weight percent, preferably from about 15 weight percent to about 50 weight percent and most preferably from about 25 weight percent to about 40 weight percent of the polymer. The polymer can be employed either alone or in combination.

The polymer can be prepared by any method known in the art. Preferably, the polymer is prepared by emulsion or solution polymerization of the nitrile monomer, acrylate monomer and multifunctional monomer copolymerizable therewith. Preferred polymers useful in the coating composition of the instant invention are prepared by the polymerization of:

100 parts by weight of (A) from about 60 percent to about 80 percent by weight of at least one nitrile monomer having the structure:

(A) $CH_2 = C\text{-}(R)\text{-}CN$

(A) $CH_2 = C\text{-}(R)\text{-}CN$

wherein R is hydrogen, a lower alkyl group having from 1 to 6 carbon atoms or a halogen; and

from about 3 percent to about 30 percent of at least one acrylate monomer having the structure:

(B) $CH_2 = C\text{-}(R_1)\text{-}COOR_2$

wherein $R_1$ is hydrogen, an alkyl group having from 1 to 6 carbon atoms or a halogen, and $R_2$ is an alkyl group having 1 to 30 carbon atoms; and

from about 3 percent to about 30 percent of at least one multifunctional monomer having the structure:

(C) $CH_2{=}CH\text{-}X\text{-}S$

wherein X is an acrylate, polyester, alkyl, epoxy, isocyanate, formaldehyde, phenolformaldehyde or nitrile backbone group and

S is olefinic unsaturation group, hydroxy group, epoxy group, isocyanate group or carboxylic acid and/or ester.

Chain transfer agents can optionally be used in the polymerization of the nitrile acrylate polymer with pendant functionality. Chain transfer agents can be used to control the molecular weight of the nitrile acrylate polymer. Chain transfer agents and the use thereof are generally well known in the art. Chain transfer agents can be employed either alone or in combination. Examples of typical chain transfer agents include but are not limited to methyl mercaptan, ethyl mercaptan, n-propyl mercaptan, isopropyl mercaptan, n-butyl mercaptan, t-butyl mercaptan, n-hexyl mercaptan, cyclohexyl mercaptan, n-octyl mercaptan, t-octyl mercaptan, t-nonyl mercaptan, n-dodecyl mercaptan, t-dodecyl mercaptan, tridecyl mercaptan and the like.

In the practice of this invention the nitrile monomer employed in the polymerization of the polymer can be employed either alone or in combination. The polymer composition contains from about 30 weight percent to about 99 weight percent, preferably from about 45 weight percent to about 90 weight percent and most preferably from about 60 weight percent to about 80 weight percent of the nitrile monomer in the polymer.

The nitrile monomer employed in the synthesis of the polymer include but are not limited to olefinically unsaturated nitrile monomer, in particular alpha, beta-olefinically unsaturated mononitrile, having the structure:

(I) $CH_2=C(R)-CN$

wherein R is hydrogen, a lower alkyl group having from 1 to 6 carbon atoms or a halogen. Such compounds include but are not limited to acrylonitrile, alpha-chloroacrylonitrile, alpha-fluoroacrylonitrile, methacrylonitrile, ethacrylonitrile and the like. The referred olefinically unsaturated nitrile useful in the present invention are acrylonitrile, methacrylonitrile and mixtures thereof.

In the practice of this invention the acrylate monomer employed in the polymerization of the polymer can be employed either alone or in combination. The polymer composition contains from about 1 weight percent to about 99 weight percent, preferably from about 2 weight percent to about 50 weight percent and most preferably from about 3 weight percent to about 30 weight percent of the acrylate monomer in the polymer.

The acrylate monomer copolymerizable with the nitrile monomer and multifunctional monomer include but are not limited to one or more of the esters of olefinically unsaturated carboxylic acid, vinyl ester, vinyl ether, vinyl ketone, alpha-olefin, vinyl aromatic monomer and the like.

The esters of olefinically unsaturated carboxylic acid include those having the structure:

(II) $CH_2=C(R_1)-COOR_2$

wherein $R_1$ is hydrogen, an alkyl group having from 1 to 6 carbon atoms, or a halogen, and $R_2$ is an alkyl group having from 1 to 30 carbon atoms. Compounds of this type include but are not limited to methyl acrylate, ethyl acrylate, propyl acrylate, butyl acrylate, amyl acrylate, hexyl acrylate, methyl methacrylate, ethyl methacrylate, propyl methacrylate, butyl methacrylate, amyl methacrylate, hexyl methacrylate, methyl alpha-chloroacrylate, ethyl alpha-chloroacrylate, hydroxy alkyl acrylate, hydroxy alkyl methacrylate, acrylic acid and the like. Most preferred are methyl acrylate, ethyl acrylate, methyl methacrylate, ethyl methacrylate, acrylic acid and methacrylic acid.

The alpha-olefins useful in the present invention are those having the structure:

(III) 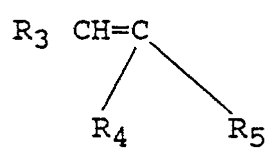

wherein $R_3$ is an alkyl group having from 1 to 10 carbon atoms and wherein $R_4$ and $R_5$ are alkyl groups having from 1 to 7 carbon atoms in which the alkyl group of $R_4$ and $R_5$ can be the same or different. Representative compounds of this type include but are not limited to isobutylene, 2-methylbutene-1, 2-methylpentene-1, 2-methylhexene-1, 2-methylheptene-1, 2-methyloctene-1, 2-ethylbutene-1, 2-propylpentene-1 and the like. Most preferred is isobutylene.

The vinyl ethers include but are not limited to methyl vinyl ether, ethyl vinyl ether, propyl vinyl ether, butyl vinyl ether, methyl isopropenyl ether, ethyl isopropenyl ether and the like. Most preferred are methyl vinyl ether, ethyl vinyl ether, propyl vinyl ether and the butyl vinyl ether.

The vinyl esters include but are not limited to vinyl acetate, vinyl propionate, vinyl butyrate and the like. Most preferred is vinyl acetate.

The vinyl aromatic monomers include but are not limited to styrene, alpha-methyl styrene, vinyl toluene, vinyl xylene, indene and the like. Most preferred are styrene and indene.

In the practice of the instant invention the multifunctional monomer employed in the polymerization of the polymer can be employed either alone or in combination. The polymer composition contains from about 1 weight percent to about 99 weight percent, preferably from about 2 weight percent to about 50 weight percent and most preferably from about 3 weight percent to about 30 weight percent of the multifunctional monomer in the polymer.

The multifunctional monomer is a chemical material with at least two reactive sites giving the polymer its pendant functionality. The functionality is determined by the number of reactive sites per chemical material. The multifunctional monomer contains one reactive site that must be a double bond that is olefinic-unsaturation in particular di, tri, tetra, or tetra (meth) acrylates or their esters. The other reactive sites in the multifunctional monomer may very and may be but are not limited to an olefinic unsaturation group, a hydroxy group, an epoxy group, an isocyanate group, a carboxylic acid and or ester and the like.

The multifunctional monomer useful in the present invention include those having the structures:

$CH_2=CHXS$

wherein X is an acrylate, polyester, alkyd, epoxy, isocyanate, formaldehyde, phenolformaldehyde or nitrile backbone group, and

wherein S is an olefinic unsaturation group, hydroxy group, epoxy group, isocyanate group, or carboxylic acid and or ester.

The group includes but is not limited to acrylate, polyester, alkyd, epoxy, isocyanate, formaldehyde, phenol-formaldehyde or nitriles oligomers, monomers, prepolymers, or polymers. The X group represents either a single monomer unit or the backbone of the polymerized monomer. The S group represents another reactive functionality of the multifunctional monomer which include but are not limited to a olefinic unsaturation group, a hydroxy group, an epoxy group, an isocyanate group, carboxylic acid and/or ester and the like.

The second component of the coating composition of the present invention is a reactive diluent. The reactive diluent is any material which is compatible with the polymer component. Preferably the reactive diluent is also activated by exposure to radiation. During cure a radical induced polymerization of the reactive diluent with reactive diluent and/or polymer is triggered by exposure to radiation. Polymerization of the coating matrix is triggered photochemically when light is used as the source of radiation. The coating composition is classified as 100 percent solids because the reactive diluent crosslinks and is incorporated into the coating matrix. Minor amounts of other diluent materials may optionally be used which may be volatile, which does not defeat the object of this invention, to provide a substantially 100 percent solids coating composition.

The reactive diluent can be employed either alone or in combination. The coating composition generally contains in percent of total weight, from about 5 percent to about 60 percent, preferably from about 15 percent to about 50 percent and most preferably from about 25 percent to about 40 percent of the reactive diluent.

Types of suitable reactive diluents include but are not limited to acrylates, olefinically unsaturated carboxylic acids and their anhydrides, vinyl esters, vinyl halides, vinyl cyanides, vinyl amides, vinyl amines, olefins and the like.

Acrylates useful as reactive diluents include but are not limited to mono, di, tri, tetra or penta (meth) acrylates or their esters. Compounds of this type include but are not limited to alkyl acrylate, cycloalkyl acrylate, ethyl acrylate, methyl cyclohexyl acrylate, diethyl glycol acrylate, glycidyltetrahydrofurfuryl, allyl acrylate, hydroxylakyl acrylate, alkene glycol acrylate, polyalkanediol diacrylate, glycol acrylate, trimethylpropane acrylate, pentaerythritol acrylate, cyanoalkyl acrylate, allyl (meth) acrylate, betacarboxyethyl acrylate, 1,3-butylene glycol di (meth) acrylate, caprolactone acrylate, 1,4-butanediol diacrylate, cyanoethyl acrylate, cyclohexyl methacrylate, diallyl fumarate, dicyclopentenyl (meth) acrylate, diethylene glycol di (meth) acrylate, 2,3-dimethylpropane 1,3-diacrylate (neopentyl glycol diacrylate), dipentaerythritol monohydroxypentaacrylate, 2-(2-ethoxyethoxy) ethyl acrylate, ethoxylate bisphenol A di (meth) acrylate, 1,6-hexanediol di (meth) acrylate, n-hexyl methacrylate, ethylene glycol dimethacrylate, glyceryl propoxy triacrylate, glycidyl (meth) acrylate, isobornyl acrylate, 2-phenoxyethylacrylate, pentaerythritol tetra (meth) acrylate, pentaerythritol triacrylate, poly (butanediol) diacrylate, polyethylene glycol di (meth) acrylate, tetraethylene glycol di (meth) acrylate, (tetraethylene) tetrahydrofurfuryl acrylate, thiodiethyleneglycol diacrylate, trimethoylpropane tri (meth) acrylate, trimethylene glycol dimethacrylate, trimethylolpropane triacrylate, tripropylene glycol diacrylate, zinc di (meth) acrylate and the like. Most preferred are ethyl acrylate, methyl cyclohexyl acrylate and diethyl glycol diacrylate.

The alpha, beta olefinically unsaturated carboxylic acids and anhydrides useful as reactive diluents include but are not limited to acrylic acid, methacrylic acid, alpha chloro cyanoacrylic acid, alpha bromo cyanoacrylic acid, maleic acid, maleic anhydride, alpha-chloro maleic acid, dichloromaleic anhydride, itaconic acid, scorbic acid and the like. Most preferred are acrylic acid and methacrylic acid.

The vinyl esters useful as reactive diluents include but are not limited to alkyl vinyl ethers, cycloalkyl vinyl ethers, aromatic vinyl ethers and the like. Typical examples of these are cyclohexylvinyl ether, methylvinyl ether, ethylvinyl ether, styrene, phenolvinyl ether and the like. Most preferred are methylvinyl ether and ethylvinyl ether.

The vinyl halides useful as reactive diluents include but are not limited to vinylchloride, vinylbromide, vinylfluoride, vinylidene chloride, vinylidene bromide, vinylidene fluoride, dichlorodifluoroethylene, chlorotrifluoroethylene, trifluoroethylene, chloroprene and the like. Most preferred are vinylchloride and vinylidene chloride.

The vinyl cyanides useful as reactive diluents include but are not limited to acrylonitrile, methacrylonitrile, maleic dinitrile, fumaronitrile, vinyl cyanide and the like. Most preferred are acrylonitrile and methacrylonitrile.

The vinylamides useful as reactive diluents include but are not limited to acrylamide, N-methylacrylamide, N,N-dimethylacrylamide, N-t-butylacrylamide, N-dodecylacrylamide, N-phenylacrylamide, N-vinylacrylamide, N,N-methylenebisacrylamide, dimethylformamide, diethylformamide and the like. Most preferred are N,N-dimethylacrylamide, N-N-methylenebisacrylamide and N,N-dimethylacrylamide.

The vinyl imides useful as reactive diluents include but are not limited to N-vinylpiperidine, vinyl pyridine and the like. Most preferred are N-vinylpiperidine and vinyl pyridine.

The olefins useful as reactive diluents include but are not limited to ethylene, propylene, butylene, amylene, hexylene, heptene, octylene, 1,3-butadiene, isoprene, styrene, alpha-methylstyrene, alpha-chlorostyrene and the like. Most preferred are styrene and alpha-methylstyrene.

Other exemplary reactive diluents are N-vinylpyrolidone, dimethylsulfoxide, N-methyl pyrrolidone, ethylene carbonate, acetonitrile, gamma-butyrolactone, dimethylsulphone carbonate, acetonitrile, gamma-butyrolactone, dimethylsulphone and the like. The most preferred are N-vinylpyrrolidone and gamma-butyrolactone.

The third component of the coating composition of the present invention is the photoinitiator. During cure the photoinitiator absorbs radiation, forming reactive intermediates that react further with the reactive diluent and polymer. A general discussion of chemical reaction initiators is available in Kirk-Othmer, Encyclopedia of Chemical Technology, Vol. 13,pp. 355-373, "Initiators", John Wiley and Sons, 1978.

The photoinitiator can be employed either alone or in combination to affect the cure of the coating composition upon exposure to radiation. The coating composition generally contains, in percent of the total weight, from about 0.01 percent to about 10 percent by weight, preferably from about 0.1 percent to about 5 percent by weight oand most preferably from about 0.5 percent to about 2 percent by weight of the photoinitiator.

The photoinitiators and the cure thereof are generally well known in the art. Examples of suitable photoinitiators include acetophenone derivatives, azo compounds, benzoin derivatives, amines and their derivatives, anthraquinone derivatives, dibenzyl ketones, benzophenone derivatives, benzoin alkyl ethers and the like.

Particular non-limiting examples of the photoinitiators include benzophenone, benzil, benzoin ethyl ether, ethyl diethanol amine, 2,2-dimethoxy-2 phenylacetophenone, azobisisobutyronitrile and the like. Most preferred are benzophenone, ethyl diethanol amine and 2,2-dimethoxy-2-phenyl acetophenone.

It will be readily apparent to those skilled in the art that the coating composition of the instant invention may be further modified by the addition of plasticizers, stabilizers, pigments, dispersants, defoamers, surfactants, extenders, fillers, reinforcing agents and other film formers. The coating compositions of the instant invention may also optionally contain various flattening agents, surface active agents, thixotropic agents, UV light absorbers, flow control agents, viscosity agents, antioxidant agents and dyes. All these additives and the use thereof are well known in the art and do not require extensive discussion, it being understood that any compound possessing the ability to function in such a manner, i.e., as a flattening agent, surface active agent, UV light absorber and the like, can be used so long as they do not deleteriously affect the radiation curing of the coating composition and do not adversely affect the characteristics of the coating.

In the practice of this invention, the radiation curable coating compositions are first compounded by adding together the reactive diluents to form a generally homogeneous mixture, to which is then added the polymer, forming a mixture. To this mixture is added the photoinitiator, preferably in the dark, with stirring. Optionally, at any step prior to the radiation cure in the process, any of the aforementioned additives may be stirred into the mixture. The various components are thoroughly mixed so as to form a generally homogeneous coating composition.

A thin, relatively uniform film of coating composition is applied onto a substrate by any of the known means such as Guardco wet film applicator rods, knife, bar, air spraying, airless spraying, dipping, roller coating, flowing, brushing, conventional and/or electrostatic spray gun, electrodeposition, and the like. The various substrates employed can be wood, paper, metal, pretreated metal, plastic and the like. Generally, the coating composition is applied in an amount sufficient to provide tack free cured film thickness of from about 0.05 mil to about 5 mil, preferably from about 0.1 mil to about 3 mil. Optionally, multiple coats of the composition may be applied to the substrate. By selection of components and additives the compositions may be applied both as transparent coatings or opaque coatings.

The coating composition is then cured by radiation, in particular photochemical radiation. The light source preferably emits wavelengths in the ultraviolet spectrum from about 2,200 A to about 14,000 A. Optionally, the light source includes light having a substantial ultraviolet spectrum from about 2,200 A to about 4,000 A. The system used to generate ultraviolet radiation for the radiation polymerization reaction can be any known in the art such as low pressure, medium pressure, high pressure, super high pressure, mercury lamps; mercury, carbon and plasma arc lamps; xenon lamps; UV light emitting diodes; UV emitting lasers and the like. The polymerizable coating compositions can also be cured using an electron beam apparatus.

The coating compositions are cured by radiation at ambient temperature.

After radiation curing, there is present on the surface of the substrate a tack free coating which is cohesive, hard, adhesive and chemically resistant.

The coating composition is comprised of the polymerization products of the polymer, the reactive diluent and the photoinitiator. It is theorized that the nitrile acrylate polymer containing pendant functionality provides a reactive site from the multifunctional monomer for polymer chain growth leading to incorporation into the polymer backbone and another reactive site for crosslinking and grafting upon to the polymer backbone and/or reactive diluents forming a crosslinked network and increasing polymer solubility. Radiation induced polymerization occurs between the polymer-polymer, polymer-reactive diluent and reactive and reactive diluent-reactive diluent with the photoinitiators incorporated therein. The coatings' superior properties are derived not only from the ability of the polymer matrix to crosslink and graft but also from the inherent barrier properties of the nitrile functionality and solubility properties of the acrylate functionality.

A general discussion as to how coatings function is available in, Kirk-othmer Encyclopedia of Chemical Technology, Vol, 7, p.113, "Corrosion and Corrosion Inhibitors", John Wiley and Sons, Inc., 1979, and L.Blecher, D.H, Lorenz, H.L. Lowd, A.S. Wood ad D.P Wyman, "Handbook of Water-Soluble Gums and Resins", R.L. Davidson, ed., McGraw Hill N.Y. 1980.

The coating compositions of the present invention exhibit excellent curability by radiation, in particular photoradiation and long term storage stability. Further, the composition of the present invention exhibits good adhesive and cohesive bonding properties and applicability in many environments. Still further, the coatings having excellent corrosion resistance, hardness and adhesion..

## Specific Embodiments

The following examples demonstrate the process and advantages of the present invention.

## Test Method

The following photocurable compositions A-S were prepared by dissolving the nitrile acrylate multifunctional polymer in the reactive diluent by stirring. To this solution, in the dark, was added the photoinitiator system. The resulting mixture was stirred to form a generally homogeneous composition.

The coating compositions A-S were applied to the surface of phosphate pretreated steel 10 × 15 cm test panels using Gardco (available from Paul N. Gardener, Lauderdale-By-The Sea, Florida) wet film application rods. The coated panel were then exposed to ultraviolet light at room temperature until a tack free coating resulted. The thickness of the coated panel A-S were about 0.1 mil to about 3 mil.

In each case, ASTM standard adhesion (tape test) and hardness (pencil) tests were carried out on the coated metal substrate.

The adhesion tape test (ASTM D 3359-78) was carried out by applying a strip of Scotch Brand No. 670 tape (available from 3M, Minnesota) to a cross-cut sectin, previously made by a sharp tool in the coated substrate. The tape was then removed. The percent adhesion, of coating remaining on the substrate, was assessed on a 0-100 scale with no adhesion being 0 and 100 percent adhesion being no loss of coating. The results of the adhesion tape test are shown in Table I.

The hardness test measures the rigidity of the organic coating applied to rigid substrates such as metal panels. The hardness test, (ASTM D 3363-74) was carried out by forcing pencil leads of increasing hardness values against the coated surface in a precisely defined manner, until one lead mars the surface. Surface hardness is defined by the hardest pencil lead which just fails to mar the coated surface. Test ranges are 6B to 8H with 8H being excellent, that is, the hardest lead failed to mar the coating. The results of the hardness test are shown in Table I.

Identical duplicate panels for coating compositions A-S were prepared as above and subjected to salt fog exposure.

The salt fog (ASTM B 117) test measures the corrosion resistance of the coating composition. Salt fog testing was carried out by masking with black tape uncoated portions of the panel. A large X is scribed on the coated portion of the panel. The panel is placed in the salt fog cabinet for a given period of time. The cabinet induces accelerated corrosion testing through exposure of the specimens to a salt-fog atmosphere. A rating is given based on the degree of rusting and the length of time the samples have been exposed to the salt-fog atmosphere. test ranges are 0 to 10, with a 0 rating for all rust and a 10 rating for no appreciable rust. Furthermore, the scale is logarithmic between the two extreme endpoints. the results of the salt fog testing are shown in Table I.

Coating Compositions

The coating compositions A-S were 25 weight percent polymer; 75 weight percent reactive diluent and 1 weight percent benzophenone and 1 weight percent ethyldiethanol amine of the photoinitiator system.

Coating compositions A-C, E, F, H-J employed N-vinyl pyrrolidone as the reactive diluent and coating compositions D, G, K-s employed gamma butyrolactone as the reactive diluent.

Polymer Compositions

Polymers A-S were synthesized by the following method: In about a 500 ml three-neck round bottom, equipped with a mechanical stirrer, reflex condenser and a temperature probe was added about 300 pphm distilled water and the appropriate pphm of monomer as is specified below. The mixture was degassed with argon and at about the same time the mixture was stirred and heated to about 60 degrees C. An initiator solution of about 0.2 pphm t-butoxypivalate in about 25 ml of degassed methanol was then added to the mixture. After about 6 hours the reaction was cooled to room temperature and about 0.2 pphm hydroquinone was added to quench the reaction. The polymer A-S were then isolated.

| | Acrylonitrile | Ethyl Acrylate | Alkyl Acrylate |
|---|---|---|---|
| A | 70 | 25 | 5 |
| B | 70 | 20 | 10 |
| C | 70 | 15 | 15 |
| D | 70 | 15 | 15 |
| E | 70 | 10 | 20 |
| F | 70 | 5 | 25 |
| G | 70 | 5 | 25 |
| H | 70 | 5 | 25 |
| I | 70 | 5 | 25 |
| | 70 | 5 | 25 |

| | Acrylonitrile | Ethylacrylate | Dicylopent (oxyethyl) (meth) acrylate |
|---|---|---|---|
| K | 70 | 15 | 15 |
| L | 70 | 15 | 15 |
| M | 70 | 10 | 20 |
| N | 70 | 10 | 20 |

| | Acrylonitrile | Methacrylate | Dicylopentyl(Oxyethy) Methacrylate |
|---|---|---|---|
| O | 70 | 25 | 5 |
| P | 70 | 20 | 10 |
| Q | 70 | 15 | 15 |
| R | 70 | 10 | 20 |
| S | 70 | 10 | 20 |

Results

The results of the coating testing demonstrates 100 percent adhesion and 8H hardness. These results demonstrate that the coating compositions of the instant inventions show excellent adhesion and hardness.

The results of the salt fog testing demonstrate that the coating in accordance with this invention renders protection from corrosion from 24 hours to 168 hours. These results exemplify excellent corrosion resistance of the coatings of the instant invention.

Although the invention has been described in detail through the preceeding examples, these examples are for the purpose of illustration only, and it is understood that variations and modifications can be made by one skilled in the art without departing from the spirit and the scope of the invention.

TABLE I

| Coating Composition | Coating Thickness (mils) | Hardness | Adhesion (%) | Rust Rating 24 hr. | 96 hr. | 100 hr. | 168 hr. |
|---|---|---|---|---|---|---|---|
| A | 0.2 | 8H | 100 | 10 | – | 6 | – |
| B | 0.1 | 8H | 100 | 9 | – | 7 | – |
| C | 0.2 | 8H | 100 | 5 | – | – | – |
| D | 0.2 | 8H | 100 | 8 | – | 4 | – |
| E | 0.3 | 8H | 100 | 0 | – | – | – |
| F | 0.3 | 8H | 100 | 0 | – | – | – |
| G | 0.2 | 8H | 100 | 7 | – | – | – |
| H | 0.2 | 8H | 100 | 10 | 4 | – | – |
| I | 0.2 | 8H | 100 | 10 | 3 | – | – |
| J | 0.2 | 8H | 100 | 10 | 4 | – | – |
| K | 0.3 | 8H | 100 | 10 | – | 4 | – |
| L | 0.3 | 8H | 100 | 9 | – | 1 | – |
| M | 0.3 | 8H | 100 | 8 | – | 2 | – |
| N | 0.3 | 8H | 100 | 7 | – | 3 | – |
| O | 0.3 | 8H | 100 | 10 | – | – | 8 |
| P | 0.3 | 8H | 100 | 10 | – | – | 6 |
| Q | 0.3 | 8H | 100 | 10 | – | – | 9 |
| R | 0.2 | 8H | 100 | 10 | – | – | 4 |
| S | 0.2 | 8H | 100 | 10 | – | – | 4 |

No rating was taken in this time point.

## Claims

1. A composition comprising a polymer comprising a nitrile monomer, acrylate monomer and multifunctional monomer; a reactive diluent; and a photoinitiator and wherein the polymer is containing pendant functionality and wherein said composition is 100% solvent free.

2. A composition as claimed in claim 1 characterised in that it contains from about 5 weight percent to about 60 weight percent, preferably from about 15 weight percent to 50 weight percent, and more preferably from about 25 weight percent to about 40 weight percent of the polymer.

3. A composition as claimed in claim 1 or claim 2 characterised in that the nitrile is selected from the group consisting of acrylonitrile, alpha-chloroacrylonitrile, alpha-fluoroacrylonitrile, methacrylonitrile, ethacrylonitrile, and combinations thereof.

4. A composition as claimed in any of claims 1 to 3 characterised in that the polymer contains from about 30 weight percent to about 99 weight percent, preferably from about 45 weight percent to about 90 weight percent, and more preferably from about 60 weight percent to about 80 weight percent of the nitrile monomer.

5. A composition as claimed in any of claims 1 to 4 characterised in that the polymer contains from about 1 weight percent to about 99 weight percent, preferably from about 2 weight percent to about 50 weight percent, and more preferably from about 3 weight percent to about 30 weight percent of the acrylate monomer.

6. A composition as claimed in any of claims 1 to 5 characterised in that the acrylate monomer is selected from the group consisting of esters of olefinically unsaturated carboxylic acid, vinyl ester, vinyl ether, vinyl ketone, alpha-olefin, vinyl aromatic monomer and combinations thereof.

7. A composition as claimed in claim 6 characterised in that the acrylate is selected from the group consisting of methyl acrylate, ethyl acrylate, methyl methacrylate, ethyl methacrylate, acrylic acid, methacrylic acid and combinations thereof.

8. A composition as claimed in any of claims 1 to 7 characterised in that the polymer contains from about 1 weight percent to about 99 weight percent, preferably from about 2 weight percent to about 50 weight percent and more preferably from about 3 weight percent to about 30 weight percent of the multifunctional monomer.

9. A composition as claimed in any of claims 1 to 8 characterised in that the multifunctional monomer contains at least two reactive sites giving the polymer its pendant functionality and wherein one reactive site is a double bond that is olefinic unsaturation and the other reactive site is selected from the group consisting of olefinic unsaturation group, a hydroxy group, and epoxy group, an isocyanate group, or a carboxylic acid and or ester.

10. A composition as claimed in any of claims 1 to 8 characterised in that the multifunctional monomer has the following structure:

$$CH_2=CHXS$$

wherein X is an acrylate, polyester, alkyd, epoxy, isocyanate, formaldehyde, phenol-formaldehyde, and or nitrile group, and

wherein S is an olefinic unsaturation group, hydroxy group, epoxy group, isocyanate group of carboxylic acid and or ester.

11. A composition as claimed in any of claims 1 to 10 characterised in that the composition contains from about 5 percent to about 60 percent, preferably from about 15 percent to about 50 percent and more preferably, from about 25 percent to about 40 percent of the reactive diluent.

12. A composition as claimed in any of claims 1 to 11 characterised in that the reactive diluent is selected from the group consisting of ethyl acrylate, methyl cyclohexyl acrylate, diethyl glycol diacrylate, acrylic acid, methacrylic acid, methylvinyl ether, ethylvinyl ether, vinylchloride, vinylidene chloride, acrylonitrile, methacrylonitrile, N,N-dimethylacrylamide, N,N-methylenebisacrylamide, N,N-dimethylacrylamide, N-vinylpiperidine, vinyl pyridine, styrene, alpha-methylstyrene, N-vinyl pyrrolidone, gamma-butyrolactone and combinations thereof.

13. A composition as claimed in any of claims 1 to 12 characterised in that the composition contains from about 0.01 percent to about 10 percent by weight, preferably from about 0.1 percent to about 5 percent by weight, and more preferably from about 0.5 percent to about 2 percent by weight of the photoinitiator.

14. A composition as claimed in any of claims 1 to 13 characterised in that the photoinitiators are selected from group consisting of benzophenone, benzil, benzoin ethyl ether, ethyl diethanol amine. 2,2-dimethoxy-2 phenylacetophenone, azobisisobutyronitrile and combinations thereof.

15. The use of the composition of claims 1 to 14 as an adhesive material.

18. The use of the composition of claims 1 to 14 as a coating.

17. The process for producing a coating comprising;
1. preparing a polymer comprising a nitrile monomer, acrylate monomer and a multifunctional monomer; 2. forming a mixture of said polymer, a reactive diluent and a photoinitiator; 3. applying said mixture of the composition to a substrate; and 4. curing the composition by radiation to form a tack free coating.

18. A process as claimed in claim 17 characterised in that the composition is applied in a single coat at a thickness from about 0.1 mil (2.54 µm) to about 3 mil (76.2 µm) to a substrate.

19. A process as claimed in claim 17 or 18 characterised in that multiple coats of the composition are applied to a substrate.

20. A process as claimed in any of claims 17 to 19 characterised in that the radiation comprises wavelengths from about 2,200 A to about 14,000 A, preferably from about 2,200 A to about 4,000 A.

21. A process as claimed in any of claims 17 to 20 characterised in that the composition is cured photochemically at ambient temperature to a tack free coating.